# EUROPEAN PATENT APPLICATION

(11) **EP 4 525 340 A1**
(43) Date of publication of application: **19.03.2025**
(21) Application number: 23810941.7
(22) Date of filing: 18.05.2023
(51) Int. Cl.: H04L 5/00, H04L 1/18, H04L 1/00

(54) **METHOD AND APPARATUS FOR DETERMINING CANDIDATE PDSCH RECEIVING OCCASION, AND RELATED DEVICE**

(30) Priority: 23.05.2022 CN 202210561861
(71) Applicant: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: YANG, Tuo, Beijing 100032 (CN)
(74) Representative: Murgitroyd & Company
(86) International application number: PCT/CN2023/095016
(87) International publication number: WO 2023/226869

(57) **Abstract**

The present disclosure discloses a method, a device, and related equipment for determining occasions for candidate PDSCH receptions. The method includes: determining target time domain resources, the target time domain resources being related to at least one of the following: first time domain resources indicated by the network-side device for the terminal; second time domain resources for multicast services sent by the network-side device; third time domain resources for broadcast services sent by the network-side device; fourth time-domain resources corresponding to a not configured subcarrier spacing; according to the determined target time domain resources, determining, occasions for candidate PDSCH receptions related to Hybrid Automatic Repeat Request-Acknowledgment (HARQ-ACK) information.

## Description

### CROSS-REFERENCE TO RELATED APPLICATION

The present application claims the priority of Chinese Patent Application No. 202210561861.1 filed on May 23, 2022 in China, the content of which is incorporated herein in its entirety by reference.

### TECHNICAL FIELD

The present disclosure relates to the technical field of communications, and in particular to methods, devices, and associated equipment for determining candidate Physical Downlink Shared Channel (PDSCH) receiving occasion.

### BACKGROUND

In the 5^{th} generation mobile communications (5G) New Radio (NR), the size of a semi-static Hybrid Automatic Repeat Request (HARQ) codebook needs to be determined based on the number of candidate receiving occasions for the Physical Downlink Shared Channel (PDSCH).

In the related arts, the number of PDSCH candidate receiving occasions depends on the number of all downlink slots configured by the network side. Consequently, the bit quantity of the semi-static HARQ codebook is also dependent upon the number of PDSCH candidate receiving occasions. The resource overhead of the semi-static HARQ codebook is relatively large, resulting in high energy consumption and significant signaling overhead during interactions between network devices and terminals.

### SUMMARY

The embodiments of the present disclosure provides a method, a device, and related equipment for determining occasions for candidate PDSCH receptions, so as to solve the problem of high energy consumption during interactions between network devices and terminal devices.

To solve the above problems, the present disclosure is implemented as follows:
As a first aspect, an embodiment of the present disclosure provides a method for determining occasions for candidate PDSCH receptions, performed by a terminal, the method includes:
determining target time domain resources, the target time domain resources being related to at least one of the following:
first time domain resources indicated by the network-side device for the terminal;
second time domain resources for multicast services sent by the network-side device;
third time domain resources for broadcast services sent by the network-side device;
fourth time-domain resources corresponding to a not configured subcarrier spacing;
according to the determined target time domain resources, determining, occasions for candidate PDSCH receptions related to Hybrid Automatic Repeat Request-Acknowledgment (HARQ-ACK) information.

Optionally, according to the determined target time domain resources, determining , occasions for candidate PDSCH receptions related to Hybrid Automatic Repeat Request-Acknowledgment (HARQ-ACK) information do not include time domain resources related to the target time domain resources.

Optionally, the determining, on the basis of the determined target time domain resources, occasions for candidate PDSCH receptions related to HARQ-ACK information includes:
determining a first set of occasions for candidate PDSCH receptions according to the set of row indexes of PDSCH time domain resource allocation; and
removing occasions for candidate PDSCH receptions overlapping with the target time domain resources from the first set to obtain a second set of occasions for candidate PDSCH receptions related to HARQ-ACK information.

Optionally, the determining, on the basis of the determined target time domain resources, occasions for candidate PDSCH receptions related to HARQ-ACK information includes:
removing, from the set of row indexes of PDSCH time domain resource allocation, row indices allocated for PDSCH time domain resource that overlap with the target time domain resources, so as to obtain remaining row indices allocated for PDSCH time domain resource; and
determining, according to the remaining row indices allocated for PDSCH time domain resource, a third set of occasions for candidate PDSCH receptions related to HARQ-ACK information.

Optionally, the determining the target time domain resources includes:
receiving a first message sent by the network-side device, the first message including a first indication information of the target time domain resources; and
determining the target time domain resources according to the first indication information.

Optionally, the determining occasions for candidate PDSCH receptions related to HARQ-ACK information based on the determined target time domain resources includes:
if the first time interval is less than the first time threshold and/or the second time interval is less than the second time threshold, determining occasions for candidate PDSCH receptions related to HARQ-ACK information based on the set of row indexes of PDSCH time domain resource allocation;
wherein, the first time interval is the time interval between the first slot where the terminal receives the first message and the current HARQ codebook feedback slot; the second time interval is the time interval between the second slot corresponding to the target time domain resources and the current HARQ codebook feedback slot.

Optionally, the method further includes:
in a case that the first time interval is greater than or equal to the first time threshold and the second time interval is greater than or equal to the second time threshold,
determining a first set of occasions for candidate PDSCH receptions based on the set of row indexes of PDSCH time domain resource allocation, and removing occasions for candidate PDSCH receptions that overlap with the target time domain resources from the first set, so as to obtain a second set of occasions for candidate PDSCH receptions related to HARQ-ACK information;
   or,
removing row indices allocated for PDSCH time domain resource that overlap with the target time domain resources from the set of row indexes of PDSCH time domain resource allocation to obtain remaining row indices allocated for PDSCH time domain resource, determining a third set of occasions for candidate PDSCH receptions related to HARQ-ACK information according to the remaining row indices allocated for PDSCH time domain resource.

Optionally, the first message includes at least one of system information, higher layer signaling, or downlink control information (DCI).

Optionally, after determining occasions for candidate PDSCH receptions related to HARQ-ACK information based on the determined target time domain resources, the method further includes:
constructing HARQ information bits based on the occasions for candidate PDSCH receptions related to HARQ-ACK information.

Optionally, the first time domain resources include at least one of the following:
time domain resources not used for reception;
time domain resources used for uplink transmission;
time domain resources used non-active;
time domain resources corresponding to preset subcarrier spacing.

As a second aspect, the embodiments of the present disclosure provide a method for determining occasions for candidate PDSCH receptions, performed by a network-side device, the method including:
sending a first message to a terminal, so that the terminal determines target time domain resources based on the first message, and determines occasions for candidate PDSCH receptions corresponding to Hybrid Automatic Repeat Request-Acknowledgment (HARQ-ACK) information based on the determined target time domain resources;
wherein the target time domain resources are related to at least one of the following time domain resources:
   first time domain resources indicated by the network-side device for the terminal;
   second time domain resources for multicast services sent by the network-side device;
   third time domain resources for broadcast services sent by the network-side device;
   fourth time domain resources corresponding to a not configured subcarrier spacing.

Optionally, according to the determined target time domain resources, determining , occasions for candidate PDSCH receptions related to Hybrid Automatic Repeat Request-Acknowledgment (HARQ-ACK) information do not include time domain resources related to the target time domain resources.

Optionally, the first time domain resources include at least one of the following:
time domain resources not used for reception;
time domain resources used for uplink transmission;
time domain resources used non-active;
preset subcarrier spacing corresponding time domain resources.

Optionally, the first message includes at least one of a system information, higher layer signaling, and downlink control information (DCI).

As a third aspect, the embodiments of the present disclosure also provide an device for determining occasions for candidate PDSCH receptions, including:
a first processor, configured to:
determine target time domain resources, the target time domain resources being related to at least one of the following:
first time domain resources indicated by the network-side device for the terminal;
second time domain resources for multicast services sent by the network-side device;
third time domain resources for broadcast services sent by the network-side device;
fourth time-domain resources corresponding to a not configured subcarrier spacing;
determine, on the basis of the determined target time domain resources, occasions for candidate PDSCH receptions corresponding to Hybrid Automatic Repeat Request-Acknowledgment (HARQ-ACK) information.

As a fourth aspect, the embodiments of the present disclosure further provide an device for determining occasions for candidate PDSCH receptions, including:
a second transceiver, configured to:
send a first message to a terminal, so that the terminal determines target time domain resources based on the first message, and determine occasions for candidate PDSCH receptions corresponding to Hybrid Automatic Repeat Request-Acknowledgment (HARQ-ACK) information based on the determined target time domain resources;
wherein the target time domain resources are related to at least one of the following time domain resources:
   first time domain resources indicated by the network-side device for the terminal;
   second time domain resources for multicast services sent by the network-side device;
   third time domain resources for broadcast services sent by the network-side device;
   fourth time domain resources corresponding to a not configured subcarrier spacing.

As a fifth aspect, the embodiments of the present disclosure further provide a communication device, including: a transceiver, a memory, a processor, and a program stored in the memory and executable on the processor; wherein the processor is configured to read the program from the memory to implement the steps of the method according to the first aspect; or implement the steps of the method according to the second aspect.

As a sixth aspect, the embodiments of the present disclosure further provide a readable storage medium storing a program, wherein the program, when executed by a processor, implements the steps of the method described in the first aspect, or implements the steps of the method described in the second aspect.

In the embodiments of the disclosure, based on the target time domain resources, the number of occasions for candidate PDSCH receptions corresponding to the determined Hybrid Automatic Repeat Request-Acknowledgment (HARQ-ACK) information is reduced, thereby reducing the bit number used for codebook feedback, saving network resources, and reducing energy consumption and signaling overhead during interactions between network side devices and terminal devices.

### BRIEF DESCRIPTION OF THE DRAWINGS

In order to explain the technical solutions of the embodiments of the present disclosure more clearly, the drawings needed to be used in the description of the embodiments of the present disclosure will be briefly introduced below. Obviously, the drawings in the following description are only some embodiments of the present disclosure. For those of ordinary skill in the art, without paying creative labor, other drawings can be obtained based on these drawings.
Fig. 1 is a schematic diagram of the network system structure applicable to the embodiments of the present disclosure;
Fig. 2 is a flowchart of a method for determining occasions for candidate PDSCH receptions according to an embodiment of the present disclosure;
Fig. 3 is a flowchart of another method for determining occasions for candidate PDSCH receptions according to an embodiment of the present disclosure;
Fig. 4 is a schematic diagram of an device for determining occasions for candidate PDSCH receptions according to an embodiment of the present disclosure;
Fig. 5 is a schematic diagram of another device for determining occasions for candidate PDSCH receptions according to an embodiment of the present disclosure;
Fig. 6 is a schematic diagram of a communication device according to an embodiment of the present disclosure.

### DETAILED DESCRIPTION

The exemplary embodiments of the present disclosure will be described hereinafter in more details in conjunction with the drawings. Although the exemplary embodiments of the present disclosure are shown in the drawings, it should be understood that the present disclosure can be implemented in various forms and should not be limited by the embodiments set forth herein. Rather, these embodiments are provided to enable a more thorough understanding of the present disclosure and to fully convey the scope of the present disclosure to those skilled in the art.

The terms "first", "second", etc. in the specification and claims of this application are used to distinguish similar objects, and do not have to be used to describe a specific order or sequence. It should be understood that the data used in this way are interchangeable under appropriate circumstances, so that the embodiments of the present application described herein can be implemented in an order other than those illustrated or described herein, for example. In addition, the terms "comprising" and "having" and any variations thereof are intended to cover non-exclusive inclusions, for example, processes, methods, systems, products or devices that contain a series of steps or units need not be limited to those clearly listed steps or units, but may include other steps or units not explicitly listed or inherent to these processes, methods, products, or devices. In addition, the term "and/or" used in the present disclosure indicates at least one of the connected objects. For example, "A and/or B and/or C" means any one of the following 7 scenarios: A alone, B alone, C alone, both A and B, both B and C, both A and C, and A, B, and C together.

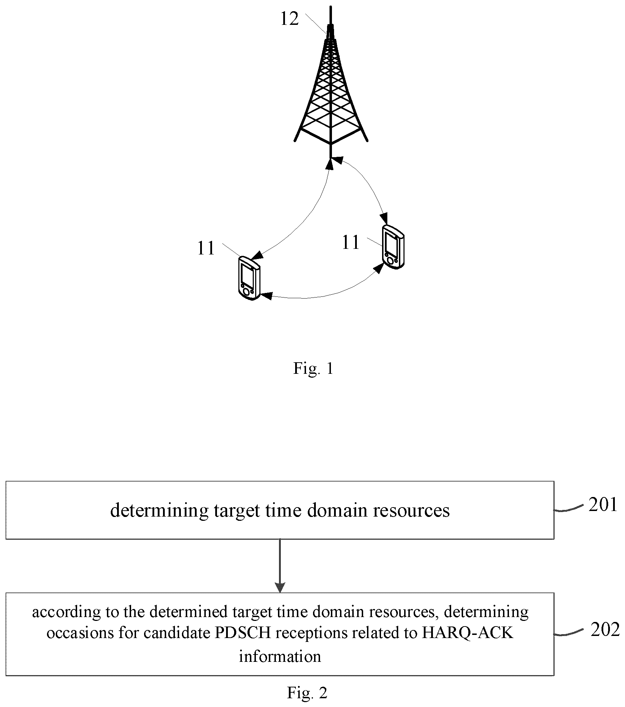

Fig. 1 is a structural diagram of a network system applicable to the embodiments of the present disclosure. As shown in Fig. 1, a data sending device 11 and a data receiving device 12 are included.

The data sending device 11 and the data receiving device 12 may communicate with each other. The data sending device 11 sends ciphertext information (Ciphertext Block) to the data receiving device 12.

In actual applications, the data sending device 11 may be a terminal (also referred to as User Equipment, UE), and the data receiving device 12 may be a network-side device; alternatively, the data sending device 11 may be a network-side device, and the data receiving device 12 can be a terminal, but it is not limited to these configurations.

The terminal may be a mobile phone, a tablet personal computer (Tablet PC), a laptop computer, a personal digital assistant (PDA), a mobile internet device (MID), a wearable device, an in-vehicle device, etc. The network-side device may be a base station, Access and Mobility Management Function (AMF), relay, access point, or other network elements.

Hereinafter, the method for determining occasions for candidate PDSCH receptions according to the embodiments of the present disclosure will be described.

Fig. 2 is a flowchart of a method for determining occasions for candidate PDSCH receptions according to an embodiment of the present disclosure. The method for determining occasions for candidate PDSCH receptions as shown in Fig. 2 can be performed by a terminal.

As shown in Fig. 2, the method for determining occasions for candidate PDSCH receptions includes the following steps:
Step 201, determining target time domain resources, the target time domain resources being related to at least one of the following:
first time domain resources indicated by the network-side device for the terminal;
second time domain resources for multicast services sent by the network-side device;
third time domain resources for broadcast services sent by the network-side device;
fourth time-domain resources corresponding to a not configured subcarrier spacing.

It should be noted that the scenario where the network-side device instructs the terminal refers to a situation where the network-side device notifies the terminal when preparing to enter a sleep mode. Considering its own energy-saving requirements, the network side may enter sleep mode to save power consumption. During the slots when the network-side device is in sleep mode, since the network side will not perform any data service scheduling, the network-side device does not require the terminal to feedback Hybrid Automatic Repeat Request (HARQ) codebook. This approach saves both power consumption on the terminal side for sending HARQ information and power consumption on the network side for receiving HARQ information. When the network side device is preparing to sleep, it sends the duration of the sleep and the time-domain patterns (which can be understood as the aforementioned first time-domain resource) to the terminal.

Additionally, a a not configured subcarrier spacing refers to a subcarrier spacing different from the subcarrier spacing configured by the network-side device or a default subcarrier spacing. In cases where the target time-domain resources include fourth time-domain resources corresponding to the a not configured subcarrier spacing, the terminal can firstly acquire the subcarrier spacing configured by the network-side device or default subcarrier spacing, and then identify the a not configured subcarrier spacing and the corresponding fourth time-domain resources based on the configured or default subcarrier spacing. For certain service channels of terminals that support only one subcarrier spacing, if the network side transmits data using a a not configured subcarrier spacing to the terminals during specific timing (i.e., the fourth time-domain resources), the terminals are unable to receive the service data and thus do not need to provide HARQ feedback.

For terminals that do not support multicast and/or broadcast services, the network sends multicast or broadcast services on the second time-domain resources or third time-domain resources, these terminals are not required to receive the multicast and/or broadcast service data, nor do they need to provide HARQ feedback.

Step 202: determining, on the basis of the determined target time domain resources, candidate Physical Downlink Shared Channel (PDSCH) receiving occasions corresponding to Hybrid Automatic Repeat Request-Acknowledgment (HARQ-ACK) information.

It should be noted that the determined candidate PDSCH reception occasions corresponding to the HARQ-ACK information can be used to construct a semi-static codebook.

In some embodiments, if the target time-domain resources include the fourth time-domain resources corresponding to a not configured subcarrier spacing, the terminal can directly exclude (remove), based on the subcarrier spacing configured by the network-side device or default subcarrier spacing, the PDSCH time-domain resources corresponding to the subcarrier spacing that is different from the configured or default subcarrier spacing.

For time slots where the network-side device is in sleep mode (first time-domain resources), since the network side will not perform any data service scheduling, the terminal is not required to provide HARQ codebook feedback. Thereby the power consumptions on the terminal side for sending HARQ information and on the network side for receiving HARQ information can be saved.

For certain service channels of terminals that support only one subcarrier spacing, if the network side transmits data using a a not configured subcarrier spacing to the terminals during specific timing (i.e., the fourth time-domain resources), the terminals are unable to receive the service data and thus do not need to provide HARQ feedback.

For terminals that do not support multicast and/or broadcast services, the network sends multicast or broadcast services on the second time-domain resources or third time-domain resources, these terminals are not required to receive the multicast and/or broadcast service data, nor do they need to provide HARQ feedback.

As above, by reducing the number of candidate PDSCH reception occasions corresponding to the determined HARQ-ACK information based on target time-domain resources, the bit quantity for codebook feedback can be reduced, thereby network resources can be saved, and the power consumption and signaling overhead during the communications process between network side device and terminal device can be reduced.

Optionally, according to the determined target time domain resources, determining , occasions for candidate PDSCH receptions related to Hybrid Automatic Repeat Request-Acknowledgment (HARQ-ACK) information do not include time domain resources related to the target time domain resources.

As described above, the determined candidate PDSCH reception occasions related to HARQ-ACK information may further adaptively exclude/remove other time-domain resources different from the target time-domain resources. The specific time-domain resources to be excluded can be determined based on actual requirements in application, without limitation to the embodiments disclosed herein.

Optionally, the determining, on the basis of the determined target time domain resources, occasions for candidate PDSCH receptions related to HARQ-ACK information includes:
determining a first set of occasions for candidate PDSCH receptions according to the set of row indexes of PDSCH time domain resource allocation; and
removing occasions for candidate PDSCH receptions overlapping with the target time domain resources from the first set to obtain a second set of occasions for candidate PDSCH receptions related to HARQ-ACK information.

The union of row indices allocated for PDSCH time-domain resources is a table of PDSCH time-domain resources (hereinafter referred to as the first PDSCH table) pre-configured by the network-side device for the terminal, pre-defined by protocol, or pre-configured by the terminal. The first PDSCH table includes at least two rows of PDSCH time-domain resources, with each row corresponding to a row index. The first set can be obtained by calculating the candidate PDSCH reception occasions for each row of PDSCH time-domain resources.

It should be noted that before calculating the candidate PDSCH reception occasions for each row of PDSCH time-domain resources, the terminal will also exclude PDSCH time-domain resources for uplink transmission from the first PDSCH table based on the K1 value of each row, to obtain a second PDSCH table (i.e., the PDSCH time-domain resource table after excluding uplink slots). Subsequently, the second PDSCH table is traversed, and the candidate PDSCH reception occasions for each row of PDSCH time-domain resources in the second PDSCH table are calculated.

After obtaining the first set, the terminal obtains the second set for codebook feedback by removing the candidate PDSCH reception occasions that overlap with the target time-domain resources.

Optionally, the determining the candidate PDSCH reception occasions related to HARQ-ACK information based on the determined target time-domain resources includes:
removing row indices of PDSCH time-domain resources overlapping with the target time-domain resources from the union of row indices allocated for PDSCH time-domain resources, thus obtaining remaining row indices allocated for PDSCH time-domain resources;
determining a third set of candidate PDSCH reception occasions related to HARQ-ACK information based on the remaining row indices allocated for PDSCH time-domain resources.

As described above, in order to determine the candidate PDSCH reception occasions related to HARQ-ACK information, it is also feasible to first remove the row indices of PDSCH time-domain resources overlapping with the target time-domain resources from the first PDSCH table, so as to obtain a third PDSCH table (corresponding to the remaining row indices allocated for PDSCH time-domain resources), and then calculate the candidate PDSCH reception occasions for each row of PDSCH time-domain resources in the third PDSCH table, thereby obtaining the third set for codebook feedback.

It should be noted that while removing the row indices of PDSCH time-domain resources overlapping with the target time-domain resources in the first PDSCH table, row indices allocated for PDSCH time-domain resources corresponding to uplink slots can also be removed simultaneously. In this case, any row of PDSCH time-domain resources in the third PDSCH table neither overlaps with the target time-domain resources nor corresponds to uplink slots.

It should be emphasized that the second set and the third set are identical. Preferably, the manner for obtaining the third set is used (i.e., firstly remove the row indices allocated for PDSCH time-domain resources overlapping with the target time-domain resources from the first PDSCH table, and then determine the candidate PDSCH reception occasions corresponding to the HARQ-ACK information based on the row indices allocated for PDSCH time-domain resources not overlapping with the target time-domain resources). By determining the candidate PDSCH reception occasions related to HARQ-ACK information, since the terminal will not receive any service data at these occasions, the present embodiment can reduce the overhead of candidate PDSCH reception occasions for PDSCH time-domain resources and the overhead of HARQ codebooks, the power consumption and signaling overhead of terminals and network-side devices can be further reduced.

Optionally, the determining the target time-domain resources includes:
receiving a first message sent by the network-side device, wherein the first message includes first indication information of the target time-domain resources;
determining the target time-domain resources according to the first indication information.

As described above, when the network-side device does not require HARQ codebook feedback from the terminal, the network-side device generates a first message containing the first indication information. By sending the first message, the terminal may remove parts overlapping with the target time-domain resources in the HARQ codebook feedback, thereby reducing the bit quantity of the terminal's codebook feedback and saving network resources.

Optionally, the determining the candidate PDSCH reception occasions related to HARQ-ACK information based on the determined target time-domain resources includes:
determining the candidate PDSCH reception occasions related to HARQ-ACK information based on the union of row indices allocated for PDSCH time-domain resources when the first time interval is less than the first time threshold and/or the second time interval is less than the second time threshold;
wherein the first time interval is defined as the time interval between the slot in which the terminal receives the first message and the current HARQ codebook feedback slot, and the second time interval is defined as the time interval between the slot corresponding to the target time-domain resources and the current HARQ codebook feedback slot.

As above, by configuring the first time threshold and the second time threshold, it avoids prolonging the decoding operation (for determining the target time-domain resources) and/or exclusion operation (for excluding PDSCH time-domain resources overlapping with the target time-domain resources), ensuring that the terminal's current HARQ codebook feedback operation can be successfully completed within a predetermined slot.

If the first time interval is less than the first time threshold, it indicates that the time available for the terminal to decode the first indication information in the first message during the current HARQ codebook operation is insufficient. Therefore, in the current HARQ codebook operation, the terminal skips the step of excluding the PDSCH time-domain resources overlapping with the target time-domain resources and directly determines the candidate PDSCH reception occasions corresponding to the HARQ-ACK information based on the first PDSCH table.

If the second time interval is less than the second time threshold, it indicates that the time available for the terminal to exclude the PDSCH time-domain resources overlapping with the target time-domain resources during the current HARQ codebook operation is insufficient. Therefore, in the current HARQ codebook feedback operation, the terminal also skips the step of excluding the PDSCH time-domain resources overlapping with the target time-domain resources and directly determines the candidate PDSCH reception occasions corresponding to the HARQ-ACK information based on the first PDSCH table.

The first slot precedes the second slot, and the second slot precedes the current HARQ codebook feedback slot.

It should be noted that in the next HARQ codebook feedback operation, the terminal can determine the first set of candidate PDSCH reception occasions by determining the candidate PDSCH reception occasions based on the union of row indices allocated for PDSCH time-domain resources, excluding candidate PDSCH reception occasions overlapping with the target time-domain resources from the first set, thereby obtaining the second set of candidate PDSCH reception occasions corresponding to the HARQ-ACK information. Alternatively, the terminal can exclude the row indices allocated for PDSCH time-domain resources overlapping with the target time-slot resources from the union of row indices, obtains the remaining row indices allocated for PDSCH time-domain resources, and then determine the third set of candidate PDSCH reception occasions related to HARQ-ACK information based on the remaining row indices allocated for PDSCH time-domain resources.

Here the next HARQ codebook feedback operation can be understood as the operation performed by the terminal after the current HARQ codebook feedback operation and before receiving a new first message carrying the first indication information sent by the network-side device. The next HARQ codebook feedback operation may occur one or more times.

Optionally, the method further includes:
in a case that the first time interval is greater than or equal to the first time threshold and the second time interval is greater than or equal to the second time threshold,
determining a first set of occasions for candidate PDSCH receptions based on the set of row indexes of PDSCH time domain resource allocation, and removing occasions for candidate PDSCH receptions that overlap with the target time domain resources from the first set, so as to obtain a second set of occasions for candidate PDSCH receptions related to HARQ-ACK information;
   or,
removing row indices allocated for PDSCH time domain resource that overlap with the target time domain resources from the set of row indexes of PDSCH time domain resource allocation to obtain remaining row indices allocated for PDSCH time domain resource, determining a third set of occasions for candidate PDSCH receptions related to HARQ-ACK information according to the remaining row indices allocated for PDSCH time domain resource.

As above, when there is sufficient time for decoding the first indication information in the first message (i.e., the first time interval is greater than or equal to the first time threshold) and sufficient time to exclude overlapping PDSCH time-domain resources with the target time-domain resources, the terminal can reduce the number of candidate PDSCH reception occasions related to HARQ-ACK information by excluding overlapping PDSCH time-domain resources. Thus the bits number needed for codebook feedback can be reduced and the network resources can be saved.

Optionally, the first message includes at least one of system information, higher layer signaling, or downlink control information (DCI).

As above, by setting the first message to include at least one of a system information, higher-layer signaling, and DCI, the method can adapt to the need for message sending in complex scenarios, ensuring that the network-side equipment can successfully complete the sending operation of the first message.

Optionally, the first time domain resources include at least one of the following:
time domain resources not used for reception;
time domain resources used for uplink transmission;
time domain resources used non-active;
time domain resources corresponding to preset subcarrier spacing.

Optionally, after determining occasions for candidate PDSCH receptions related to HARQ-ACK information based on the determined target time domain resources, the method further includes:
constructing HARQ information bits based on the occasions for candidate PDSCH receptions related to HARQ-ACK information.

As above, after obtaining the candidate PDSCH reception occasions related to HARQ-ACK information, HARQ information bits can be constructed to complete message feedback to the network-side device.

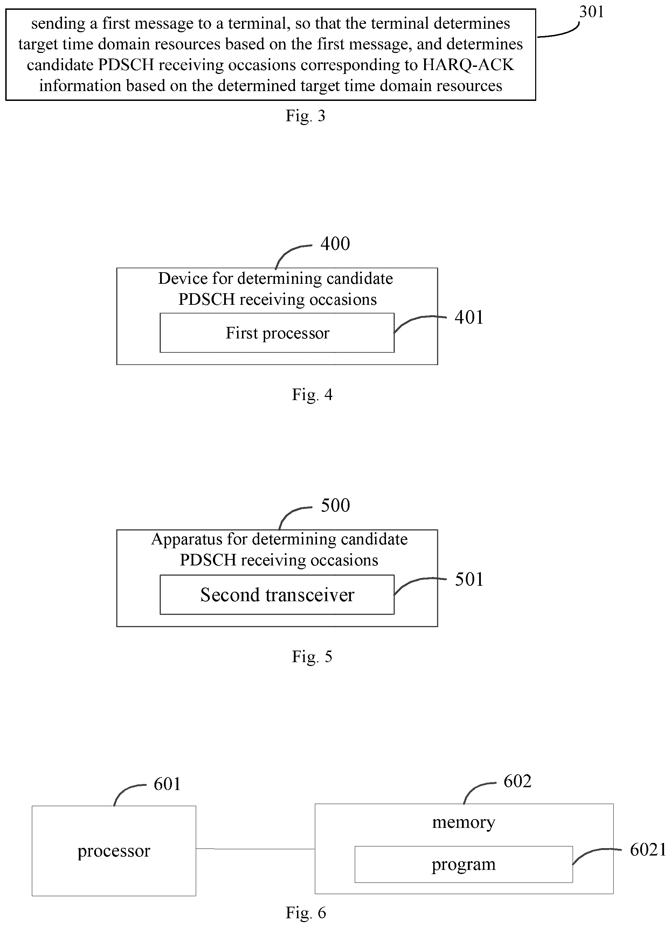

Fig. 3 is a flowchart of another method for determining occasions for candidate PDSCH receptions according to an embodiment of the present disclosure. The method for determining occasions for candidate PDSCH receptions as shown in Fig. 3 can be performed by a network side device.

As shown in Fig. 3, the method for determining occasions for candidate PDSCH receptions includes:
sending a first message to a terminal, so that the terminal determines target time domain resources based on the first message, and determines occasions for candidate PDSCH receptions corresponding to Hybrid Automatic Repeat Request-Acknowledgment (HARQ-ACK) information based on the determined target time domain resources;
wherein the target time domain resources are related to at least one of the following time domain resources:
   first time domain resources indicated by the network-side device for the terminal;
   second time domain resources for multicast services sent by the network-side device;
   third time domain resources for broadcast services sent by the network-side device;
   fourth time domain resources corresponding to a not configured subcarrier spacing.

Optionally, according to the determined target time domain resources, determining , occasions for candidate PDSCH receptions related to Hybrid Automatic Repeat Request-Acknowledgment (HARQ-ACK) information do not include time domain resources related to the target time domain resources.

Optionally, the first time domain resources include at least one of the following:
time domain resources not used for reception;
time domain resources used for uplink transmission;
time domain resources used non-active.

Optionally, the first message includes at least one of a system information, higher layer signaling, and downlink control information (DCI).

It should be noted that the present embodiment is the implementation of network-side device corresponding to the method embodiment shown in Figure 2. Therefore, reference can be made to the descriptions in the aforementioned method embodiment, and the same beneficial effects can be achieved. To avoid redundancy, these details will not be repeated here.

Fig. 4 is a schematic diagram of a device 400 for determining occasions for candidate PDSCH receptions according to an embodiment of the present disclosure. As shown in Fig. 4, the device 400 for determining occasions for candidate PDSCH receptions includes:
a first processor 401, configured to:
determine target time domain resources, the target time domain resources being related to at least one of the following:
first time domain resources indicated by the network-side device for the terminal;
second time domain resources for multicast services sent by the network-side device;
third time domain resources for broadcast services sent by the network-side device;
fourth time-domain resources corresponding to a not configured subcarrier spacing;
determine, on the basis of the determined target time domain resources, occasions for candidate PDSCH receptions corresponding to Hybrid Automatic Repeat Request-Acknowledgment (HARQ-ACK) information.

Optionally, according to the determined target time domain resources, determining , occasions for candidate PDSCH receptions related to Hybrid Automatic Repeat Request-Acknowledgment (HARQ-ACK) information do not include time domain resources related to the target time domain resources.

Optionally, the first processor 401 is configured to:
determine a first set of occasions for candidate PDSCH receptions according to the set of row indexes of PDSCH time domain resource allocation; and
remove occasions for candidate PDSCH receptions overlapping with the target time domain resources from the first set to obtain a second set of occasions for candidate PDSCH receptions related to HARQ-ACK information.

Optionally, the first processor 401 is configured to:
remove, from the set of row indexes of PDSCH time domain resource allocation, row indices allocated for PDSCH time domain resource that overlap with the target time domain resources, so as to obtain remaining row indices allocated for PDSCH time domain resource; and
determine, according to the remaining row indices allocated for PDSCH time domain resource, a third set of occasions for candidate PDSCH receptions related to HARQ-ACK information.

Optionally, the device 400 for determining occasions for candidate PDSCH receptions further includes a first transceiver, configured to:
receive a first message sent by the network-side device, the first message including a first indication information of the target time domain resources.

Optionally, the first processor 401 is further configured to:
determine the target time domain resources according to the first indication information.

Optionally, the first processor 401 is configured to:
if the first time interval is less than the first time threshold and/or the second time interval is less than the second time threshold, determine occasions for candidate PDSCH receptions related to HARQ-ACK information based on the set of row indexes of PDSCH time domain resource allocation;
wherein, the first time interval is the time interval between the first slot where the terminal receives the first message and the current HARQ codebook feedback slot; the second time interval is the time interval between the second slot corresponding to the target time domain resources and the current HARQ codebook feedback slot.

Optionally, the first processor 401 is configured to:
in a case that the first time interval is greater than or equal to the first time threshold and the second time interval is greater than or equal to the second time threshold,
determine a first set of occasions for candidate PDSCH receptions based on the set of row indexes of PDSCH time domain resource allocation, and remove occasions for candidate PDSCH receptions that overlap with the target time domain resources from the first set, so as to obtain a second set of occasions for candidate PDSCH receptions related to HARQ-ACK information;
   or,
remove row indices allocated for PDSCH time domain resource that overlap with the target time domain resources from the set of row indexes of PDSCH time domain resource allocation to obtain remaining row indices allocated for PDSCH time domain resource, determine a third set of occasions for candidate PDSCH receptions related to HARQ-ACK information according to the remaining row indices allocated for PDSCH time domain resource.

Optionally, the first message includes at least one of system information, higher layer signaling, or downlink control information (DCI).

Optionally, the first processor 401 is further configured to:
construct HARQ information bits based on the occasions for candidate PDSCH receptions related to HARQ-ACK information.

Optionally, the first time domain resources include at least one of the following:
time domain resources not used for reception;
time domain resources used for uplink transmission;
time domain resources used non-active.

The device 400 for determining candidate PDSCH receiving occasion is capable of implementing the method embodiment shown in Fig. 2 of the present disclosure, and the same beneficial effects can be achieved. To avoid redundancy, these details will not be repeated here.

Fig. 5 is a schematic diagram of another device 500 for determining occasions for candidate PDSCH receptions according to an embodiment of the present disclosure. As shown in Fig. 5, the device 500 for determining occasions for candidate PDSCH receptions includes:
a second transceiver 501, configured to:
send a first message to a terminal, so that the terminal determines target time domain resources based on the first message, and determine occasions for candidate PDSCH receptions corresponding to Hybrid Automatic Repeat Request-Acknowledgment (HARQ-ACK) information based on the determined target time domain resources;
wherein the target time domain resources are related to at least one of the following time domain resources:
first time domain resources indicated by the network-side device for the terminal;
second time domain resources for multicast services sent by the network-side device;
third time domain resources for broadcast services sent by the network-side device;
fourth time domain resources corresponding to a not configured subcarrier spacing.

Optionally, according to the determined target time domain resources, determining , occasions for candidate PDSCH receptions related to Hybrid Automatic Repeat Request-Acknowledgment (HARQ-ACK) information do not include time domain resources related to the target time domain resources.

Optionally, the first time domain resources include at least one of the following:
time domain resources not used for reception;
time domain resources used for uplink transmission;
time domain resources used non-active.

Optionally, the first message includes at least one of a system information, higher layer signaling, and downlink control information (DCI).

The device 500 for determining candidate PDSCH receiving occasion is capable of implementing the method embodiment shown in Fig. 3 of the present disclosure, and the same beneficial effects can be achieved. To avoid redundancy, these details will not be repeated here.

Embodiments of the present disclosure further provide a communication device. As shown in Fig. 6, the communication device includes a processor 601, a memory 602 and a program 6021 stored in the memory 602 and executable by the processor 601.

In the case where the communication device is a terminal, when executed by the processor 601, the program 6021 can implement the steps in the method embodiment corresponding to Figure 2 and achieve the same beneficial effects, which will not be repeated here.

In the case where the communication device is network-side equipment, when executed by the processor 601, program 6021 can implement the steps in the method embodiment corresponding to Figure 3 and achieve the same beneficial effects, which will not be repeated here.

Those skilled in the art will understand that all or some of the steps of the described method embodiments can be implemented through hardware related to program instructions, and that these programs can be stored on a readable medium. This disclosure also provides a readable storage medium on which a computer program is stored, and when executed by a processor, this computer program can implement any step in the method embodiments corresponding to Figures 2 or 3 and achieve the same technical effects. To avoid redundancy, these details are not repeated here.

The storage medium may be, for example, Read-Only Memory (ROM), Random Access Memory (RAM), magnetic disks, optical discs, etc.

It should be noted that in this document, terms such as "comprising" or "including" and any variations thereof are intended to cover non-exclusive inclusion so that a process, method, item, or device that includes a list of elements not only includes those elements but may also include other elements not expressly listed, or elements inherent to such a process, method, item, or device. Without further limitation, an element defined by the phrase "comprising a..." does not exclude the presence of additional identical elements in the process, method, item, or device that comprises the element.

Moreover, it should be pointed out that the scope of methods and devices in this disclosure is not limited to being executed in the order illustrated or discussed. They may also involve performing functions almost simultaneously or in reverse order, depending on the functionalities involved. For instance, the described methods may be performed in an order different from the one described, and various steps may be added, omitted, or combined. Additionally, features described with reference to certain examples may be combined in other examples.

The above are preferred embodiments of the present disclosure. It should be noted that, for those of ordinary skill in the art, several improvements and modifications can be made without departing from the principle described in the present disclosure, which also fall within the protective scope of the present disclosure.

## Claims

1. A method for determining occasions for candidate PDSCH receptions, performed by a terminal, the method comprises:
determining target time domain resources, the target time domain resources being related to at least one of the following:
first time domain resources indicated by the network-side device for the terminal;
second time domain resources for multicast services transmission by the network-side device;
third time domain resources for broadcast services transmission by the network-side device;
fourth time-domain resources corresponding to a not configured subcarrier spacing;
according to the determined target time domain resources, determining occasions for candidate PDSCH receptions related to Hybrid Automatic Repeat Request-Acknowledgment (HARQ-ACK) information.

2. The method according to claim 1, wherein determining occasions for candidate PDSCH receptions related to Hybrid Automatic Repeat Request-Acknowledgment (HARQ-ACK) information do not include time domain resources related to the target time domain resources.

3. The method according to claim 1, wherein according to the determined target time domain resources, determining occasions for candidate PDSCH receptions related to HARQ-ACK information comprises:
determining a first set of occasions for candidate PDSCH receptions according to the union of row indexes of PDSCH time domain resource allocation; and
removing occasions for candidate PDSCH receptions overlapping with the target time domain resources from the first set to obtain a second set of occasions for candidate PDSCH receptions related to HARQ-ACK information.

4. The method according to claim 1, wherein according to the determined target time domain resources, determining occasions for candidate PDSCH receptions related to HARQ-ACK information comprises occasions for candidate PDSCH receptions related to HARQ-ACK information:
removing, from the union of row indexes of PDSCH time domain resource allocation, row indexes of PDSCH time domain resource allocation that overlap with the target time domain resources, so as to obtain remaining row indexes of PDSCH time domain resource allocation; and
determining, according to the remaining row indexes of PDSCH time domain resource allocation, a third set of occasions for candidate PDSCH receptions related to HARQ-ACK information.

5. The method according to claim 1, wherein the determining the target time domain resources includes:
receiving a first message sent by the network-side device, the first message including a first indication information of the target time domain resources; and
determining the target time domain resources according to the first indication information.

6. The method according to claim 5, wherein the determining occasions for candidate PDSCH receptions related to HARQ-ACK information based on the determined target time domain resources comprises:
if the first time interval is less than the first time threshold and/or the second time interval is less than the second time threshold, determining occasions for candidate PDSCH receptions related to HARQ-ACK information based on the union of row indexes of PDSCH time domain resource allocation;
wherein, the first time interval is the time interval between the first slot where the terminal receives the first message and the current HARQ codebook feedback slot; the second time interval is the time interval between the second slot corresponding to the target time domain resources and the current HARQ codebook feedback slot.

7. The method according to claim 6, further comprising:
in a case that the first time interval is greater than or equal to the first time threshold and the second time interval is greater than or equal to the second time threshold,
determining a first set of occasions for candidate PDSCH receptions based on the union of row indexes of PDSCH time domain resource allocation, and removing occasions for candidate PDSCH receptions that overlap with the target time domain resources from the first set, so as to obtain a second set of occasions for candidate PDSCH receptions related occasions for candidate PDSCH receptions related to HARQ-ACK information;
or,
removing row indexes of PDSCH time domain resource allocation that overlap with the target time domain resources from the union of row indexes of PDSCH time domain resource allocation to obtain remaining row indexes of PDSCH time domain resource allocation, determining a third set of occasions for candidate PDSCH receptions related to HARQ-ACK information according to the remaining row indexes of PDSCH time domain resource allocation.

8. The method according to claim 5, wherein the first message comprises at least one of system information, higher layer signaling, or downlink control information (DCI).

9. The method according to claim 1, wherein after determining occasions for candidate PDSCH receptions related to HARQ-ACK information based on the determined target time domain resources, the method further comprises:
constructing HARQ information bits based on the occasions for candidate PDSCH receptions related to HARQ-ACK information.

10. The method according to claim 1, wherein the first time domain resources comprise at least one of the following:
time domain resources not used for downlink reception;
time domain resources used for uplink transmission; or,
time domain resources used for non-active.

11. A method for determining occasions for candidate PDSCH receptions, performed by a network-side device, the method comprises:
sending a first message to a terminal, so that the terminal determines target time domain resources based on the first message, and determines occasions for candidate PDSCH receptions corresponding to Hybrid Automatic Repeat Request-Acknowledgment (HARQ-ACK) information based on the determined target time domain resources;
wherein the target time domain resources are related to at least one of the following time domain resources:
first time domain resources indicated by the network-side device for the terminal;
second time domain resources for multicast services sent by the network-side device;
third time domain resources for broadcast services sent by the network-side device;
fourth time domain resources corresponding to a not configured subcarrier spacing.

12. The method according to claim 11, wherein according to the determined target time domain resources, determining , occasions for candidate PDSCH receptions related to Hybrid Automatic Repeat Request-Acknowledgment (HARQ-ACK) information do not include time domain resources related to the target time domain resources.

13. The method according to claim 11, wherein the first time domain resources comprise at least one of the following:
time domain resources not used for reception;
time domain resources used for uplink transmission; or,
time domain resources used non-active.

14. The method according to claim 11, wherein the first message comprises at least one of a system information, higher layer signaling, or downlink control information (DCI).

15. A device for determining occasions for candidate PDSCH receptions, comprising:
a first processor, configured to:
determine target time domain resources, the target time domain resources being related to at least one of the following:
first time domain resources indicated by the network-side device for the terminal;
second time domain resources for multicast services sent by the network-side device;
third time domain resources for broadcast services sent by the network-side device; or,
fourth time-domain resources corresponding to a not configured subcarrier spacing;
determine, on the basis of the determined target time domain resources, occasions for candidate PDSCH receptions corresponding to Hybrid Automatic Repeat Request-Acknowledgment (HARQ-ACK) information.

16. A device for determining occasions for candidate PDSCH receptions, comprising:
a second transceiver, configured to:
send a first message to a terminal, so that the terminal determines target time domain resources based on the first message, and determine occasions for candidate PDSCH receptions corresponding to Hybrid Automatic Repeat Request-Acknowledgment (HARQ-ACK) information based on the determined target time domain resources;
wherein the target time domain resources are related to at least one of the following time domain resources:
first time domain resources indicated by the network-side device for the terminal;
second time domain resources for multicast services sent by the network-side device;
third time domain resources for broadcast services sent by the network-side device; or,
fourth time domain resources corresponding to a not configured subcarrier spacing.

17. A communication device, comprising: a transceiver, a memory, a processor, and a program stored in the memory and executable on the processor; wherein the processor is configured to read the program from the memory to implement the steps of the method for determining occasions for candidate PDSCH receptions according to any one of claims 1 to 10; or implement the steps of the method for determining occasions for candidate PDSCH receptions according to any one of claims 11-14.

18. A computer readable storage medium having a computer program stored thereon, the computer program implementing, when executed by a processor, the steps of the method for determining occasions for candidate PDSCH receptions according to any one of claims 1 to 10; or implementing the steps of the method for determining occasions for candidate PDSCH receptions according to any one of claims 11-14.
